# EUROPEAN PATENT APPLICATION

(11) **EP 2 290 514 A2**
(43) Date of publication of application: **02.03.2011**
(21) Application number: 10008815.2
(22) Date of filing: 24.08.2010
(51) Int. Cl.: G06F 3/048

(54) **Mobile terminal and controlling method thereof**

(30) Priority: 26.08.2009 KR 20090079151
(71) Applicant: LG Electronics Inc., Seoul 150-721 (KR)
(72) Inventor: Jeong, Kye Sook, Kumchon-gu Seoul, 153-801 (KR); Cho, Jung Ok, Kumchon-gu Seoul, 153-801 (KR); Yang, Seung Hyun, Kumchon-gu Seoul, 153-801 (KR); Cho, Hee Young, Kumchon-gu Seoul, 153-801 (KR)
(74) Representative: Katérle, Axel

(57) **Abstract**

A mobile terminal and controlling method thereof are disclosed, by which a terminal user is facilitated to use a specific function of a mobile terminal in a locked state to prevent an incorrect touch input to a touchscreen provided to the mobile terminal. The present invention includes entering a terminal locked state, displaying a standby image on a touchscreen by image blurring, releasing the locked state if a prescribed touch gesture is performed on the touchscreen, and displaying the standby image by image deblurring.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for implementing a terminal to be used in further consideration of user's convenience.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

Recently, touchscreen type mobile terminals tend to be globally introduced. This touchscreen type mobile terminal enters a locked state to prevent an incorrect touch from being inputted by a terminal user if a user input is not performed for predetermined duration. When the mobile terminal is in the locked state, a method of facilitating a terminal user to conveniently use a specific function is necessary. And, the demand for this method keeps rising.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a terminal user is facilitated to use a specific function of a mobile terminal in a locked state to prevent an incorrect touch input to a touchscreen provided to the mobile terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a touchscreen, and a control unit configured to display a standby image on the touchscreen by image blurring when the mobile terminal is in a locked state, to release the locked state when a prescribed touch gesture is performed on the touchscreen, and to display the standby image by image deblurring when the lock state is released.

In another aspect of the present invention, a method of controlling a mobile terminal includes entering a terminal locked state, displaying a standby image on a touchscreen by image blurring, releasing the locked state if a prescribed touch gesture is performed on the touchscreen, and displaying the standby image by image deblurring.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIG. 3 is a flowchart for a method of controlling a mobile terminal according to an embodiment of the present invention; and

FIGs. 4 to 9 are diagrams for display screens on which a method of controlling a mobile terminal according to an embodiment of the present invention is implemented.

### DETAILED DESCRIPTION OF THE INVENTION

Reference will now be made in detail to the preferred embodiments of the present invention, examples of which are illustrated in the accompanying drawings. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or like parts. As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators.

However, by way of non-limiting example only, further description will be with regard to a mobile terminal 100, and it should be noted that such teachings may apply equally to other types of terminals.

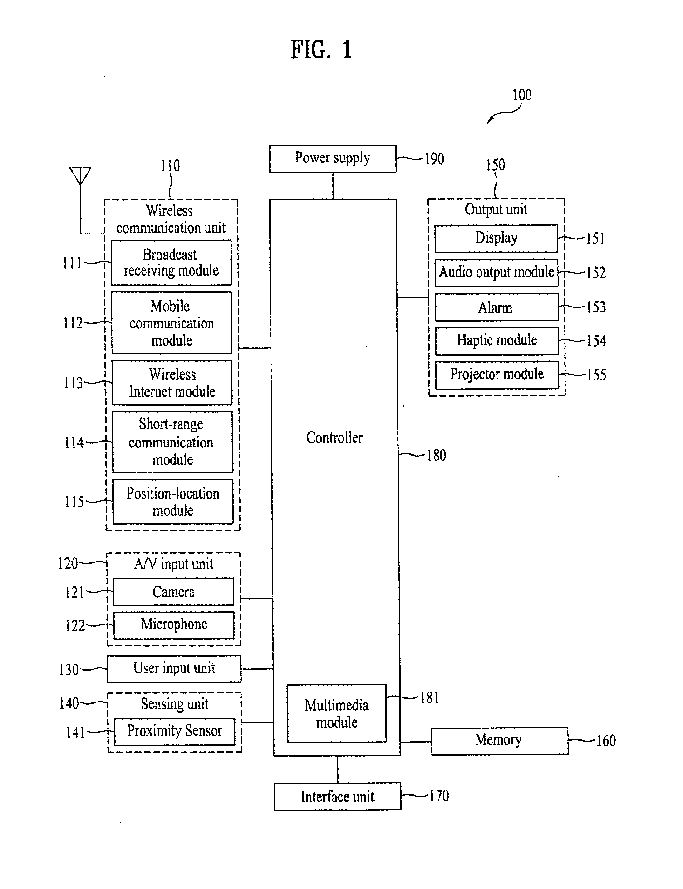

FIG. 1 is a block diagram of a mobile terminal 100 in accordance with an embodiment of the present invention. FIG. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

At least two broadcast receiving modules 111 can be provided to the mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, a haptic module 154, a projector module 155 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

Data for touch gestures corresponding to prescribed execution functions can be further stored in the memory unit 160. Therefore, if a specific one of the touch gestures is performed on the touchscreen, the execution function corresponding to the specific touch gesture can be executed in the mobile terminal 100. This will be explained later in this disclosure.

The memory unit 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

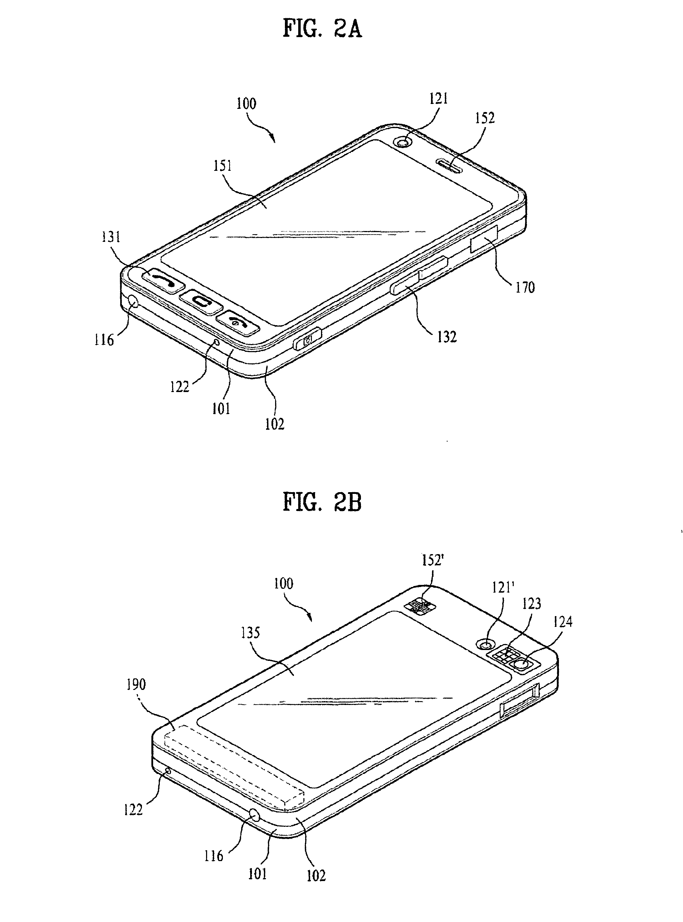

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B is a perspective diagram of a backside of the terminal shown in FIG. 2A.

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

In the following description, embodiments related to a controlling method applicable to the above-configured mobile terminal are explained with reference to the accompanying drawings.

In the following description of the embodiments, assume that the display 151 includes a touchscreen. If the display 151 includes the touchscreen, it further facilitates the following embodiments to be implemented. In the following description, a display screen of the display 151 shall be indicated by a reference number 400.

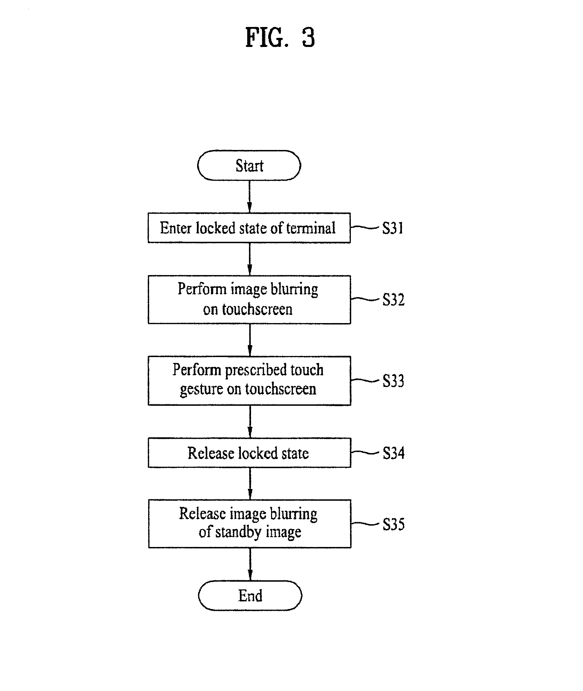

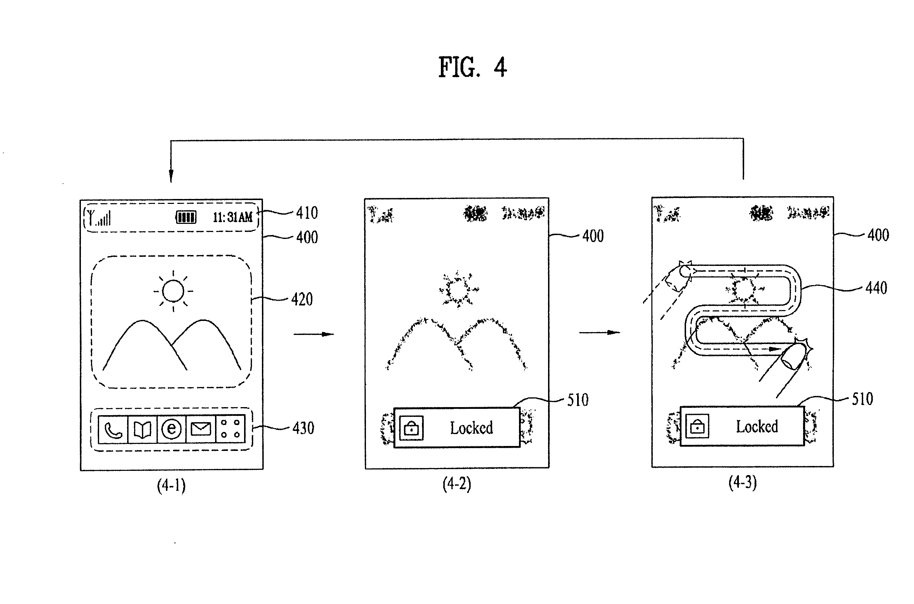

FIG. 3 is a flowchart for a method of controlling a mobile terminal according to an embodiment of the present invention, and FIGs. 4 to 9 are diagrams for display screens on which a method of controlling a mobile terminal according to an embodiment of the present invention is implemented.

Referring to (4-1) of FIG. 4, the mobile terminal 100 is in a standby mode and an image (hereinafter named 'standby image') of the standby mode is displayed on the touchscreen 400. In the standby image, at least one indicator 410 indicating an operational state of the mobile terminal 100, a background image 420 and at least one menu icon 430 can exist. It is not necessary for all of the indicator 410, the background image 420 and the menu icon 430 to exist in the standby image. For instance, at least one of them may not be displayed on the standby image.

Subsequently, an event may not occur during a prescribed time in the mobile terminal 100. As mentioned in the foregoing description, this event may include at least one of a call signal reception, a message reception, a key signal input and a touch input.

If so, referring to (4-2) of FIG. 4, the mobile terminal 100 is able to enter a locked state [S31]. Once the mobile terminal 100 enters the locked state, any touch may not be recognized on the touchscreen except prescribed touch gestures explained in the following description.

If the mobile terminal 100 enters the locked state, the standby image can be displayed on the touchscreen 400 in a manner of image blurring [S32].

In this case, this image blurring may correspond to an image processing scheme of blurring a line, boundary and the like within an image to enable the image to be seen as if seen through frosted glass. It is a matter of course that the image-blurring image can be restored into an original image before the image blurring. The restored image shall be named an image-burring released image or image deblurring image.

A locked state indicator 510 can be displayed on the touchscreen 400 to indicate that the mobile terminal 100 is in the locked state. When the mobile terminal 100 is in the locked state, it is not mandatory for the locked state indicator 510 to be displayed. Optionally, the locked state indicator may not be displayed.

Subsequently, referring to (4-3) of FIG. 4, a prescribed touch gesture can be performed on the touchscreen 400 [S33]. The prescribed touch gesture is performed in a manner of touching the touchscreen 400 with a pointer and then dragged to leave a prescribed trace. This prescribed touch gesture will be explained later in this disclosure. While the touch gesture is performed, the standby image can be displayed by image deblurring on a portion 440 corresponding to the trace of the touch gesture.

If the prescribed touch gesture is performed, the locked state of the mobile terminal 100 can be canceled [S34].

Therefore, referring to (4-1) of FIG. 4, the whole standby image can be displayed in a manner of image deblurring on the touchscreen 400 (i.e., the image deblurring is canceled) [S35].

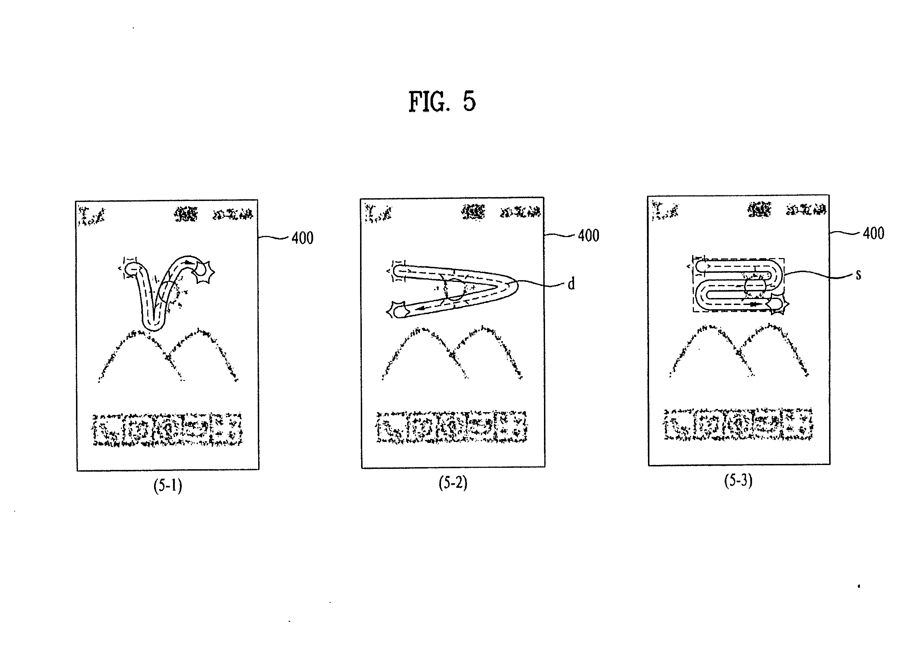

In the following description, the prescribed touch gesture is explained with reference to FIG. 5.

Referring to (5-1) of FIG. 5, the touch gesture may include a touch & drag performed in a manner of touching the touchscreen 400 with such a pointer as a finger, a stylus pen and the like and then dragging the pointer in a prescribed form or according to a prescribed trace. For instance, in (5-1) of FIG. 5, the prescribed form is 'r', by which the present invention is non-limited. And, it is understood that the prescribed form can include any other preset form.

Referring to (5-2) of FIG. 5, the touch gesture may include a touch & drag performed in a manner of touching the touchscreen 400 with a pointer and then dragging the pointer in a prescribed distance d or more. Alternatively, the touch gesture may include a touch & drag performed in a manner of dragging the touched pointer according to at least one or more reciprocations.

Referring to (5-3) of FIG. 5, the touch gesture may include a touch & drag performed in a manner of touching the touchscreen 400 with a pointer and then rubbing a prescribed area on the touchscreen with the touched pointer. For instance, the touch gesture may include a touch & drag to enable a prescribed area or more area of the touchscreen 400 to be image-deblurred by the trace of the touch gesture.

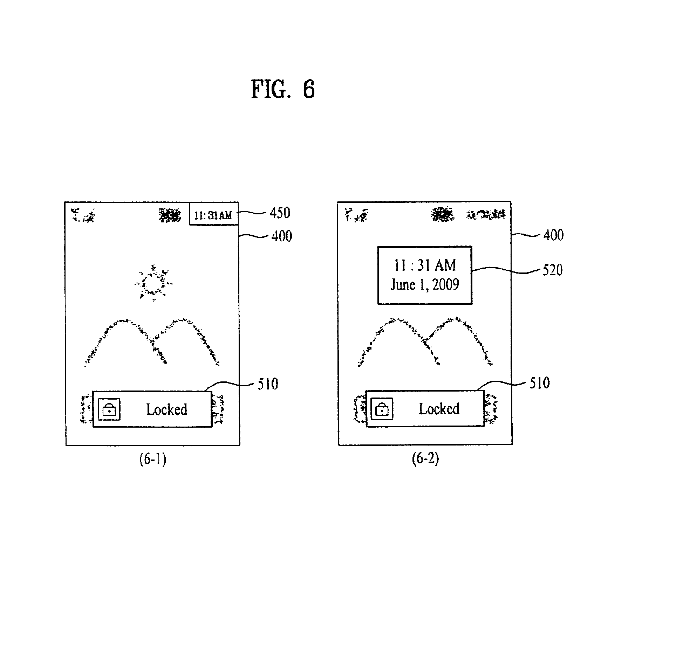

In the following description, when the mobile terminal 100 is in the locked state, the image-blurring standby image displayed on the touchscreen 400 is explained with reference to FIG. 6.

Referring to (6-1) of FIG. 6, a portion of the standby image on the touchscreen 400 may not be image-blurred even if the mobile terminal 100 enters the locked state. In (6-1) of FIG. 6, exemplarily shown is that the image-deblurred portion is a watch region 450 indicating a current hour. The image-deblurred portion 450 may include any portion of the standby image.

In (6-1) of FIG. 6, shown is that the locked state indicator 510 is displayed on the touchscreen 400 by image deblurring. As mentioned in the foregoing description, it does not matter that the locked state indicator 510 is not displayed.

Referring to (6-2) of FIG. 6, a window 520 indicating information necessary for the mobile terminal 100 can be displayed without image blurring on the image-blurring standby image on the touchscreen. In (6-2) of FIG. 6, exemplarily shown is that the necessary information includes current hour and data information, by which the present embodiment is non-limited.

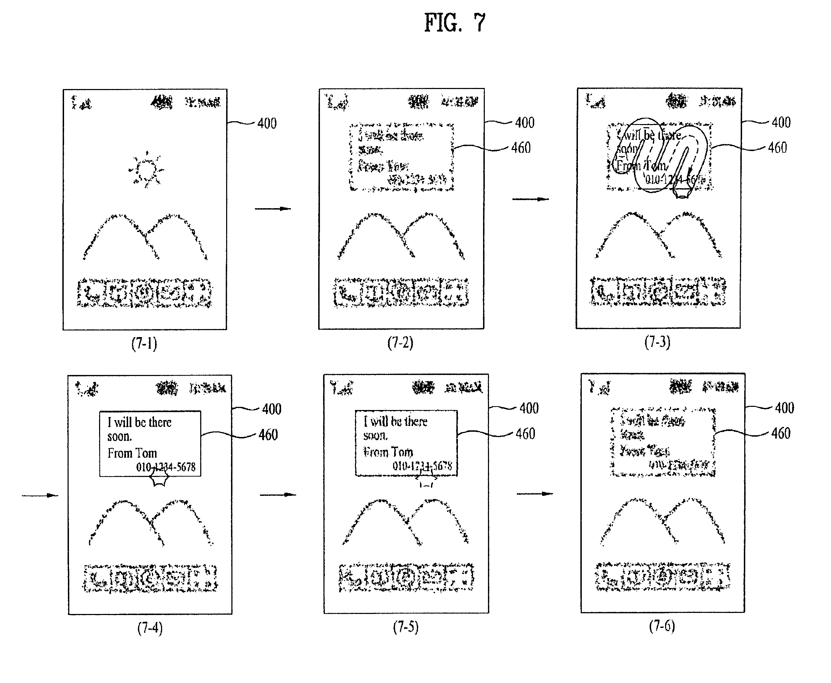

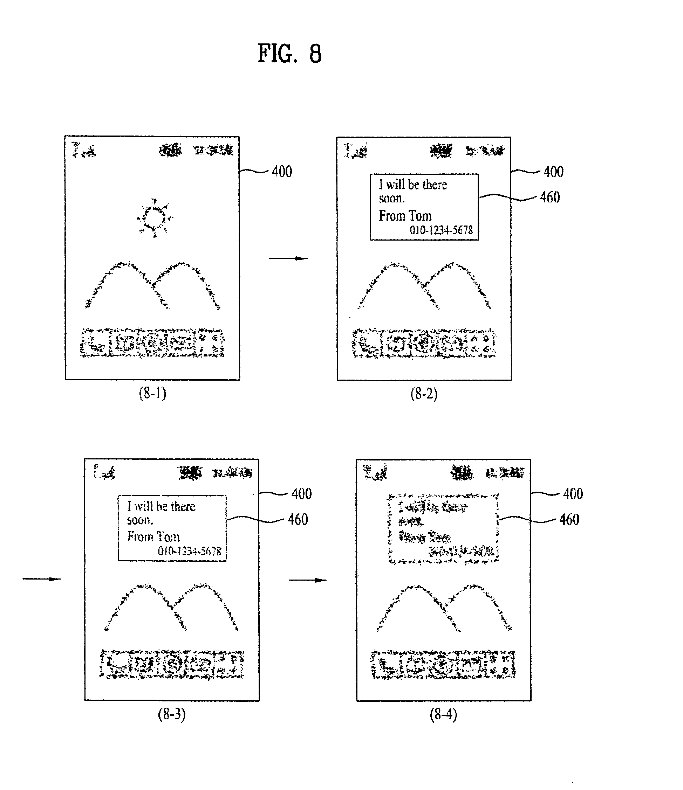

When an event of a message reception takes place in the mobile terminal in the locked state, the transition of the standby image is described with reference to FIG. 7 and FIG. 8 as follows. In this case, the message may include one of a short text message, a multimedia message, an instant message and an email. For clarity and convenience of the following description, assume that the message includes the short text message.

Referring to (7-1) of FIG. 7, while the mobile terminal 100 is in the locked state, the standby image is displayed on the touchscreen 400 in a manner of image blurring.

In doing so, such an event as a message reception may take place in the mobile terminal 100.

If so, referring to (7-2) of FIG. 7, a message window 460 according to the event can be displayed on the touchscreen 400 in a manner of image blurring. Therefore, although the message window 460 contains a content of the message, an image of the content can be displayed not to be recognized by a user in a manner of image blurring.

Referring to (7-3) of FIG. 7, a prescribed touch gesture can be performed on the touchscreen 400. This prescribed touch gesture can be the same touch gesture to unlock the locked state shown in FIG. 4 or FIG. 5. Alternatively, the prescribed touch gesture may differ from the former touch gesture in a trace, length or size of the touch gesture. Details of the prescribed touch gesture will be omitted in the following description for clarity and convenience of the present specification.

The prescribed touch gesture can be performed on the message window 460.

If so, referring to (7-4) of FIG. 7, after the prescribed touch gesture has been performed, while the touchscreen is touched with the pointer, the message window 460 is displayed by image deblurring. Therefore, a content of the message window can be displayed to be recognized by a terminal user.

The message window 460 can be displayed by deblurring right after the prescribed touch gesture has been performed. Alternatively, after the prescribed touch gesture has been performed, the message window 460 can be displayed by image deblurring gradually for a prescribed time.

Although the message window 460 is image-deblurred, a standby image on the touchscreen 400 except the message window 460 can keep being displayed by image blurring.

If a touch release is performed in a manner that the pointer is separated from the touchscreen 400, referring to (7-5) and (7-6) of FIG. 7, an image of the message window 460 can blur gradually for a prescribed time. Alternatively, when the touch with the pointer is released, the image of the message window 460 can blur instantly.

In the above description, after the touch gesture has been performed, when the touch release is performed, the message window 460 undergoes image blurring, by which the present embodiment is non-limited. Alternatively, after the touch gesture has been performed, the message window 460 undergoes image deblurring for a prescribed time irrespective of the touch release of the pointer. After duration of the prescribed time, the image window 460 can undergo image blurring.

In the above description, when the message event takes place in the mobile terminal 100, the image-blurring message window is displayed, by which the present embodiment is non-limited. Alternatively, when the message event takes place, an image-deblurring message window can be displayed. This is further explained in detail with reference to FIG. 8 as follows.

Referring to (8-1) of FIG. 8, while the mobile terminal 100 is in the locked state, the standby image is displayed on the touchscreen 400 in a manner of image blurring.

In doing so, such an event as a message reception may take place in the mobile terminal 100.

If so, referring to (8-2) of FIG. 8, a message window 460 according to the event can be displayed on the touchscreen 400 in a manner of image deblurring. Therefore, the message window 460 is able to contain a content of the message and an image of the content can be displayed to be recognized by a user.

Subsequently, if a manipulation of the user input unit 130 or a touch to the touchscreen 400 is not conducted for a prescribed time by a terminal user, the image window 460, as shown in (8-3) and (804) of FIG. 8, can under go image blurring gradually.

When the message window 460 undergoes the image blurring, if a prescribed touch gesture is performed, image deblurring can occur as explained in the foregoing description with reference to FIG. 7.

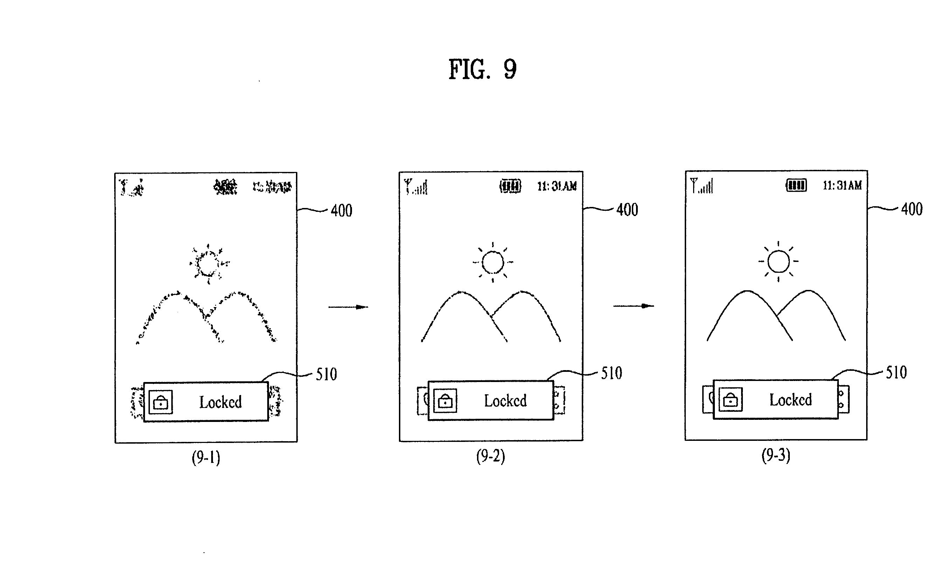

FIG. 9 is explained as follows.

Referring to (9-1) of FIG. 9, while the mobile terminal 100 is in the locked state, the standby image is displayed on the touchscreen 400 in a manner of image blurring. And, a locked state indicator 510 can be displayed on the touchscreen 400.

Subsequently, a prescribed key button provided to the user input unit 130 can be pressed.

If so, referring to (9-2) and (9-3) of FIG. 9, while the key button is being pressed, the standby image can undergo image deblurring gradually. Alternatively, it is understood that the standby image can undergo image deblurring as soon as the key button is pressed. Although the standby image undergoes the image deblurring, the mobile terminal 100 can still keep the locked state.

If the key button is pressed no longer, the standby image can undergo image blurring gradually or instantly.

Accordingly, the present invention provides the following effects and/or advantages.

First of all, according to at least one of embodiments of the present invention, even if a mobile terminal provided with a touchscreen is in a locked state to prevent an incorrect touch input to the touchscreen, a terminal user is facilitated to use a prescribed necessary function.

It will be apparent to those skilled in the art that various modifications and variations can be specified into other form(s) without departing from the spirit or scope of the inventions.

For instance, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the controller 180 of the terminal.

It will be apparent to those skilled in the art that various modifications and variations can be made in the present invention.

## Claims

1. A mobile terminal comprising:
a touchscreen (151); and
a control unit (180) configured to display a standby image on the touchscreen by blurring the standby image when the mobile terminal is in a locked state and not blurring the standby image when the mobile terminal is not in the locked state,
wherein the locked state is released in response to a prescribed touch gesture performed on the touch screen.

2. The mobile terminal of claim 1, wherein the prescribed touch gesture comprises a touch and drag operation performed for a distance that is equal to or greater than a predetermined distance.

3. The mobile terminal of any of claims 1 and 2, wherein the touch and drag operation comprises at least one reciprocation.

4. The mobile terminal of claim 1, wherein the prescribed touch gesture comprises a touch and drag operation performed according to a prescribed form.

5. The mobile terminal of claim 1, wherein the prescribed touch gesture comprises a touch and drag operation performed by contacting the touchscreen and rubbing an area within or beyond a predetermined area on the touchscreen with a pointer.

6. The mobile terminal of any of claims 1 to 5, wherein blurring the standby image comprises blurring a first portion of the standby image without blurring a second portion of the standby image.

7. The mobile terminal of any of claims 1 to 6, wherein the control unit is further
configured to display an event window associated with a prescribed event on the touchscreen without blurring when the prescribed event occurs during the locked state, and wherein the control unit blurs the event window after a prescribed duration of time.

8. The mobile terminal of any of claims 1 to 6, wherein the control unit is further configured to display an event window associated with a prescribed event by blurring the event window when the prescribed event occurs during the locked state, and wherein the control unit is further configured to no longer blur the event window in response to a prescribed touch and drag operation performed on the touchscreen.

9. The mobile terminal of claim 8, wherein the control unit is further configured to no longer blur the event window when a pointer in contact with the touchscreen for performing the prescribed touch and drag operation is no longer in contact with the touchscreen.

10. The mobile terminal of claim 8, wherein the control unit is further configured to gradually blur the event window when a pointer used to perform the prescribed touch and drag operation is no longer in contact with the touchscreen.

11. The mobile terminal of any of claims 1 to 10, further comprising a user input unit, wherein the control unit is further configured to maintain the locked state and no longer blur the standby image while a key button of the user input unit is manipulated.

12. The mobile terminal of claim 11, wherein the control unit is further configured to blur the standby image when the key button is no longer manipulated.

13. The mobile terminal of claim 12, wherein the control unit is further configured to gradually no longer blur the standby image when the user input unit is manipulated and gradually blur the standby image when the user input unit is no longer manipulated.

14. The mobile terminal of any of claims 1 to 13, wherein the control unit is further configured to recognize the prescribed touch gesture and not to recognize any other touch or touch gesture during the locked state.

15. A method of controlling a mobile terminal, the method comprising:
Entering (S31) a locked state of the mobile terminal;
Blurring (S32) a standby image displayed on a touch screen of the mobile terminal;
Releasing (S33, S34) the locked state when a prescribed touch gesture is performed on the touchscreen; and
no longer blurring (S35) the standby image when the locked state is released.
